# EUROPEAN PATENT APPLICATION

(11) **EP 1 860 464 A1**
(43) Date of publication of application: **28.11.2007**
(21) Application number: 06725781.6
(22) Date of filing: 24.02.2006
(51) Int. Cl.: G01T 1/20, G01T 1/203

(54) **RADIOCHEMICAL SENSOR FOR FLUIDS**

(30) Priority: 25.02.2005 ES 200500480
(71) Applicant: Universidad de Barcelona, 08028 Barcelona (ES)
(72) Inventor: TARANCÓN SANZ, Álex, E-08840 Viladecans (Barcelona) (ES); GARCÍA MARTÍNEZ, José Francisco, E-08009 Barcelona (ES); RAURET DALMAU, Gemma, E-08034 Barcelona (ES)
(74) Representative: Barlocci, Anna
(86) International application number: PCT/ES2006/000083
(87) International publication number: WO 2006/089991

(57) **Abstract**

The apparatus for the determination of radionuclides in a continuous flow of a fluid comprises an alpha-beta chamber that converts alpha, beta and gamma radiation into photons; a gamma chamber that converts gamma radiation into photons; an external covering shield that isolates the alpha-beta chamber and the gamma chamber from environmental UV-visible light; and means for separatedly sending photons generated in the chambers to an analizing unit. It permits determinations on-line, remotely, and continuously.

## Description

This invention relates to the field of nuclear activities and particularly to the control of presence of radionuclides in the environment.

### BACKGROUND ART

Along the second half of the twentieth century, many nuclear activities have been developed in different parts of the Earth. Nuclear weapons and power reactors have been the two most important industries; locally, medical and research activities have also introduced many radionuclides into the environment. Radioactive wastes are processed and stored or released to the environment depending on their chemical and radiochemical composition. Thus, directly or indirectly, the consequence of these nuclear activities and waste treatments, even working under control, is the dissemination of radionuclides in the environment. The paths followed in this dissemination are related to the origin of the radionuclides, the process in which they are involved and their chemical nature, among others. The potential hazards derived from the presence of radionuclides in the environment make necessary their control.

Radiation protection plans include the activity determination of many radionuclides in different matrices. These determinations usually follow the classical analytical approach based on sampling and further transport of sample to the laboratory where treatment, measurement and data analysis are performed. These steps consume human power, generate waste, and introduce an important delay between the moment when a compartment is sampled and when the isotope activities are known. Some approaches to fast information have been done by establishing air radioactivity controls at some specific sites of the world.

To overcome the inherent limitations of the analytical process, sensors are being developed for many routine applications. In the field of radioactivity, the most important advance is the use of area monitors for gamma emitters (cf. US 5.442.180). The reduction of some analytical steps has also been included in the development of continuous procedures for beta radionuclides determinations (cf. US 6.303.936). Nevertheless, no sensor for fluid and field applications has been described to date (cfr. G.F. Knoll "Radiation detection and measurement", New York, John Wiley and Sons, Inc. 2000; J.W. Grate et al., "Sequential injection separation system with stopped-flow radiometric detection for automated analysis of 99Tc in nuclear waste", Analytical Chemistry 1998, vol. 70, pp 977A-84A). Therefore, detecting and determining radioactivity in fluids is a problem not totally solved yet.

### SUMMARY OF THE INVENTION

The present invention solves some of the problems mentioned above, by providing an apparatus for radioactivity determination in fluids. The apparatus has capability and flexibility to detect and determine successfully on-line, remotely, and continuously the presence of different type of radionuclides in a sample.

Thus, an aspect of the present invention relates to an apparatus for the determination of radionuclides in a continuous flow of a fluid, comprising: (i) an alpha-beta chamber that converts alpha, beta and gamma radiation into photons and that is in contact with the fluid, said alpha-beta chamber comprising an "in" tube and an "out" tube to allow fluid flow; (ii) a gamma chamber that converts gamma radiation into photons, and that totally or partially covers the alpha-beta chamber (4), said gamma chamber being isolated from the fluid and from the photons generated in the alpha-beta chamber (4); (iii) an external covering shield that isolates the alpha-beta chamber and the gamma chamber from environmental UV-visible light; and (iv) means for separatedly sending photons generated in the respective chambers (4,6) to an analizing unit that converts the respective photons into respective electrical signals and that processes these signals.

As it is well understood, fluid is defined as a nonsolid state of matter in which atoms or molecules are free to move, as in a gas or liquid, so the sample to be analyzed for the apparatus can have different nature and can come from different sources, such as water of rivers or seas, liquid wastes of hospitals or nuclear plants, air, gases streams generated in nuclear plants, etc. The term "radionuclide" means nuclide containing isotopes that decay or emit radiation, "nuclide" meaning a species of atom that is distinguished by the number of neutrons or protons it contains.

In a particular embodiment of the invention, the active material of both chambers is solid plastic scintillator. A plastic scintillator is a solid solution of a fluorescent solute, a luminiphor, in a polymeric solvent, and it can be manufactured in different shapes. Solid plastic scintillators suitable for this invention and well known to skilled in the art, are those based on polyvinyltoluene, polyethylene, polypropylene, polymethyl methacrylate and others with a luminiphor solved such as PPO (2,5-diphenyloxazole) or POPOP (1,4-bis-[2-(5-phenyloxazolyl)]-benzene). In presence of a solid plastic scintillator, alpha and beta particles and gamma radiation can interact with the polymeric solvent molecule which will become excited to a higher energetic state. Then, the polymeric molecule relaxes by transfering energy to another polymeric molecule or to a luminiphor molecule. Finally, the luminiphor relaxes and emits a photon that can be detected by a photons detection device, as a photomultiplier. More photons will be obtained until all the energy of the radioactive event is converted into photons. In each radioactive event a set of photons is produced. Thus, the number of photons produced is related to the energy of the radioactive event and, the number of sets of photons generated in a period of time is related to the activity of the sample.

In a more particular embodiment, the gamma chamber is formed by a solid block of solid plastic scintillator. In another particular embodiment, the alpha-beta chamber comprises a hollow defined by a wall that separates it from the gamma chamber. Particularly, the hollow is filled with beads of solid plastic scintillator and/or the wall is formed by solid plastic scintillator. A preferred embodiment of the invention is that wherein the alpha-beta chamber has the hollow filled with beads of solid plastic scintillator and the wall that separates it from the gamma chamber is also formed by solid plastic scintillator. The fact that both walls and beads are of plastic scintillator makes sure that all the alpha and beta particles will find a scintillator to deposit its energy.

Preferred plastic scintillator beads have a diameter between 250 and 500 µm. The beads preferably have spherical shape and are transparent to visible light. Interaction between beads and beta and alpha particles depends on the proximity of the beads to the particle, so the particle could lose part of its energy in interactions with medium without producing any detectable signal. This has special relevance for alpha and low energy beta particles which need beads of low diameter to be properly detected since the short the diameter of the beads is, the short the distance between beads and particles is, the more energy is deposited and the more signal is obtained.

Furthermore, in a particular embodiment, the alpha-beta chamber and the gamma chamber are coated with layers which reflect the photons generated inside, except for the respective sites of attachment of the respective sending means. Reflective layers are used to avoid the lost of photons and allow the maximum number of photons arrive to the sending means.

In another embodiment of the invention, the means for separatedly sending photons generated in the respective chambers to an analizing unit are optical fibers. A preferred configuration of optical fibers for the purpose of the invention is that wherein a single bundle which comes from each chamber is divided randomly in two subbundles before achieving the analyzing unit. Each subbundle of each pair is put in front of a photons detector device and the signal coming from the subbunldes of each pair is compared. The events that are produced simultaneously in the subbunldes of each pair are due to true radioactive events and are accepted whereas those that are only obtained in one of the subbbundles of each pair are due to background effects and can be rejected, thus reducing the background registered.

In another embodiment, the alpha-beta chamber and the gamma chamber have shapes defined by concentric cylinders and are provided with blunt-conical pipes on one of their sides in order to adapt to optical fibers, both pipes pointing to opposite directions.

Finally, in another embodiment, the external covering shield of the apparatus has a detachable part for having access to the hollow of the alpha-beta chamber, for replacing the beads of solid plastic scintillator or cleaning the chamber, for instance.

The structure and the operation of the apparatus are described in detail in the description of particular embodiments.

Another aspect of the invention refers to a method for the determination of radionuclides in a continuous flow of a fluid using the apparatus as defined above. In a particular embodiment, the fluid is a liquid.

The apparatus of the invention is capable to determine separately the activity coming from alpha or beta radionuclide emitters and the activity produced by gamma emitters. Determinations are done on-line, remotely and continuously. The apparatus, applied to a potential radioactive fluid, provides continuous information about its activity level to a central station. Depending on the application, the chambers of the apparatus will have different size and shape.

The apparatus of the invention is connected to an analyzing unit that converts the respective photons coming from each chamber into respective electrical signals and that processes these signals. The analyzing unit can discriminate between energies and type of radiation. In this description, the term "analyzing unit" could be also named "transductor". Also in this description, the apparatus of the invention could be named as "receptor". Both parts, the apparatus of the invention together with the analyzing unit will form a "sensor" or a "detector". Thus, the apparatus of the invention, either alone or coupled with an analyzing unit are suscepticle to be commercialized.

Throughout the description and claims the word "comprise" and its variations are not intended to exclude other technical features, components, or steps. The abstract of this application is incorporated herein as reference. Additional objects, advantages and features of the invention will become apparent to those skilled in the art upon examination of the description or may be learned by practice of the invention. The following particular embodiments and drawings are provided by way of illustration, and they are not intended to be limiting of the present invention.

### DESCRIPTION OF THE DRAWINGS

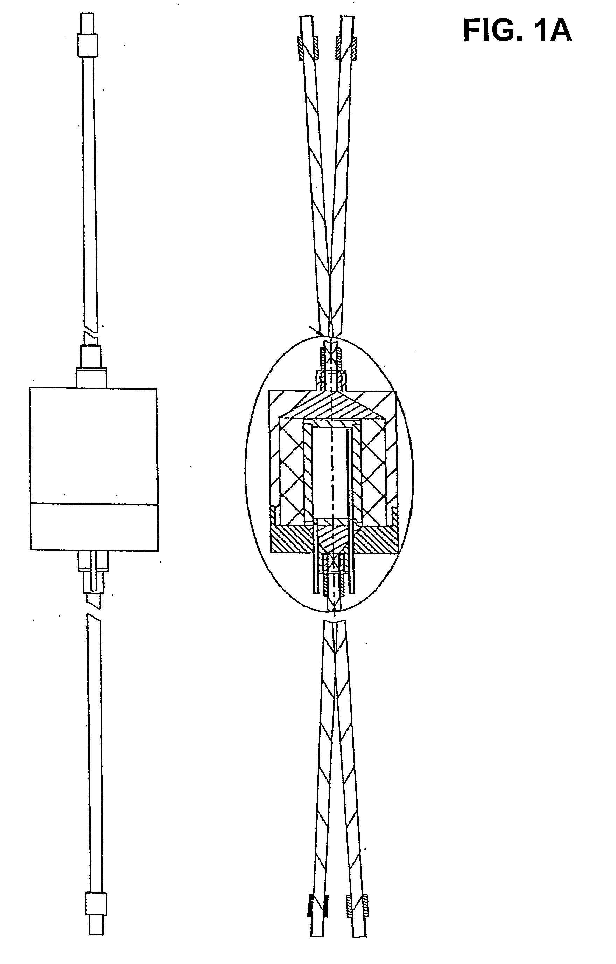

FIG. 1A shows a general view of the structure of the apparatus internally and externally.

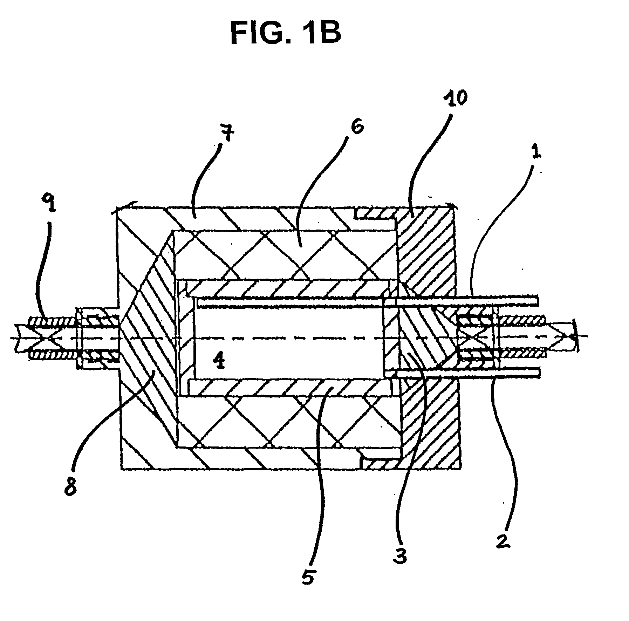

FIG. 1 B shows the detailed structure of the apparatus: (1) "in" tube; (2) "out" tube; (3) alpha-beta chamber pipe; (4) alpha-beta chamber; (5) alpha-beta chamber walls; (6) gamma chamber; (7) covering shield; (8) gamma chamber pipe; (9) sending means; (10) detachable part.
FIG. 2 depicts detection efficiency (E, in %) distribution for ⁹⁰Sr/⁹⁰Y in the alpha-beta chamber (FIG. 2A) and for ¹³⁴Cs in the gamma chamber (FIG. 2B), as a function of the fluid volume (ml pumped) for different volumes of contamination pulse.
FIG. 3 depicts detection efficiency (count rate, CR, in Bq) distribution of ⁹⁰Sr/⁹⁰Y (---), ²⁴⁰Pu (__) and ¹³⁴Cs (++), in the alpha-beta chamber and ¹³⁴Cs (***) in the gamma chamber, for a contamination pulse of 20 ml at the fluid volume corresponding to the maxima signals. x-axis indicates channels (C).
FIG. 4 shows blank spectra of the alpha-beta chamber (---), gamma chamber (++) and alpha-beta plus gamma chambers (***) in coincidence. Count rate (CR, in Bq) versus channels (C) is represented.

### DETAILED DESCRIPTION OF PARTICULAR EMBODIMENTS

### Detailed description of the apparatus

The apparatus is made of plastic scintillator and it is in this part where an optical signal, related to the concentration of radionuclides in the fluid, is produced. The optical signal is conducted through optical fibers to the analyzing unit. The analyzing unit is composed by electronic units and it is in this part where the optical signal is converted to an electrical pulse and classified according to their origin, shape and energy. Spectra are then stored in a computer where are the data treatment is done. Computer also commands all the measurement process. The apparatus is formed by two concentric cylinders, the internal cylinder is the alpha-beta chamber and the external cylinder is the gamma chamber. This set is surrounded by a plastic shield.

The alpha-beta chamber is a cylinder made of solid plastic scintillator BC-408 (Bicron), externally coated, except for one of the lateral sides, first by a photons reflective layer and secondly by a black light-tight layer. The uncovered side is coupled to a pipe of photons made of plastic and also externally covered by the reflective and the light-tight layers except at its end where a bundle of optical fibers, prepared to conduct visible photons by total internal reflection, is coupled. The cylinder of the alpha-beta chamber is totally filled up with BC-400 (Bicron) solid plastic scintillator beads. This chamber is connected to the exterior of the apparatus by two stainess steel tubes (in and out) through the same side where the fibers are coupled. These tubes cross the plastic scintillator wall of the cylinder, the pipe of photons and the plastic shield. One the tubes starts at the top of the chamber and the other at the bottom.

The gamma chamber is a cylinder made of solid plastic scintillator that completely surrounds the alpha-beta chamber. The walls are also coated by the reflective and light-tight layers. As in the alpha-beta chamber, one of the sides of the cylinder is not coated and it is coupled to a plastic photons pipe, again externally coated of the reflective and light-tight layers. The end of the pipe is connected to a bundle of optical fibers prepared to conduct visible photons by total internal reflection. The whole set, including the two chambers, their photons pipes and the coupling of their bundles of optical fibers, is included in an black plastic cylinder that acts as shielding.

### Operation of the apparatus

The apparatus can work in two ways: by immersing it in the fluid to be analyzed (in this way the fluid surrounds the apparatus and it also comes into the alpha-beta chamber); and just introducing the fluid into the alpha-beta chamber.

The fluid to be analyzed comes into the cylinder of the alpha-beta chamber by the "in" tube, fills it up the free space of the chamber and once it is completely full, leave the chamber by the "out" tube. The time of residence of the fluid in the alpha-beta chamber depends on the flow. At any case, when the fluid is in the chamber the disintegration of the radionuclides included in the fluid interacts with the plastic scintillator of walls and beads starting a process of energy transfer that ends with the production of a flash of photons. Some of these photons arrive to the plastic scintillator walls, are conducted to the pipe of photons and latter on to the bundle of optical fibers. Therefore, each disintegration process can be observed by the set of photons produced and collected in the optical fibers. The characteristics of this set of photons depend on the energy and origin of each radioactive disintegration. No signal will be produced in the gamma chamber as a consequence of the disintegration of these alpha or beta emitters because alpha and beta particles can not penetrate through the walls of the alpha-beta chamber and interact with the gamma chamber.

The disintegration of a gamma emitter will produce similar consequences in the plastic scintillator of the chambers regardless of whether it is located in the fluid that surrounds the apparatus or in the fluid that is in the alpha-beta chamber. The gamma rays emitted will penetrate and interact with the plastic scintillator of both, gamma and alpha-beta chambers, producing a flash of photons that will be transmitted to the optical fibers bundles.

The alpha or beta radionuclides that surround the apparatus will not produce any signal in the gamma chamber or in the alpha-beta chamber. The external plastic shield stops these disintegrations before they reach the scintillation medium. Any cosmic ray that arrives to the volume of the apparatus will interact probably with both chambers, gamma and alpha-beta, yielding a signal in both systems. Once the signals are produced, the optical fibers conduct the photons to a remote position where the analyzing unit is located. The single bundle which comes from each chamber is divided randomly in two subbundles before achieving the analyzing unit.

The analyzing unit is build up by using commercial electronic units. It begins with two pairs of phomultiplier tubes (PMT). Each pair is used to couple the two subbundles of each chamber. The two PMT of each chamber are then connected to a coincidence system to reduce background. The signal coming from the alpha-beta chamber includes information about alpha (a), beta (b) and gamma (c) emitters included in the fluid plus the cosmic background (bc) (a+b+c+bc) whereas the signal coming from the gamma chamber includes information about gamma emitters and the cosmic background (c+cb). After, both signals have a process of coincidence and a process of ainticoincidence obtaining the (c+cb) signal and the (a+b) signals separately. These signals are amplified, converted to digital, analyzed and stored in the computer.

### Reagents and solutions

All reagents used were of reagent or analytical grade. The active stock solutions used for the preparation of calibration and test solutions were:
1) ⁹⁰Sr/⁹⁰Y calibrant of 6.22*10⁴ ± 9.32*10² disintegration per minute per gram (dpm/g) in HCI 0.1 M from Amersham international.
2) ¹³⁴Cs calibrant of 86.04*10⁷ ± 4.30*10⁶ dpm/g in CsCI 0.1M and HCI 0.1M from Amersham international.
3) ²⁴⁰Pu calibrant of 8.16*10⁴ ± 1.22*10³ dpm/g in 2M nitric acid from Centro de Investigaciones Energéticas Medioambientales y Tecnológicas (CIEMAT).

All the active solutions were prepared by diluting a weighed amount of standard solution in a weighed amount of the specific medium previously prepared with inactive distilled water.

### Other apparatus

A peristaltic pump Gilson Miniplus 3 with eight channels was used to pump solutions into the apparatus. The tubing used was PVC of 2.06 mm i.d. and 50 cm length. A 1414 Liquid Scintillation detector (EGG&Wallac) with logarithmic amplification and multichannel analyzer of 1024 channels was used. The detector was modified by EGG&Wallac to allow the entrance of the bundles of optical fibers from the top. A reflective conical metallic piece, located in the measurement chamber, was used to reflect the transmitted photons from the end of the fibers to the photomultipliers. SenCont software was designed to control the acquisition time with high accuracy and extreme reduction of the detector dead time.

### Procedure

Simulated effluent was introduced in alpha-beta chamber through the "in" tube by using a peristaltic pump. The flow was determined in each measurement by determining the volume pumped during a certain period of time. Normal flow was around 0.5 ml/min. Background was established by measuring for five minutes a continuous flow of the corresponding carrier solution. Punctual contaminations were done by pumping a known volume of an active solution into the alpha-beta chamber. Once the active solution was loaded, a carrier solution was pumped into the apparatus since the initial conditions were reached. During this period of time, successive spectra were captured every ten seconds. Initial conditions were reached when five consecutive 10-second measurements did not differ statistically from the previous background value. After this process, a new background measurement was done. All operations were carried out without allowing the entrance of air into the apparatus. A continuous contamination scenario was simulated by continuous pumping of an active solution and taking a measurement every 120 minutes. The apparatus was calibrated for each isotope (⁹⁰Sr/⁹⁰Y, ²⁴⁰Pu and ¹³⁴Cs in alpha-beta chamber and ¹³⁴Cs in gamma chamber) by introducing punctual contamination pulses of increasing volumes from 0.2 to 20 ml and continuous contamination measurements (assimilated to a 60 ml pulse). Evaluation of the calibration curves was performed by measuring a set of nine unknown punctual contaminations (three activity levels and three contamination volumes) for ⁹⁰Sr/⁹⁰Y, ²⁴⁰Pu and ¹³⁴Cs in the alpha-beta chamber and a set of five unknown pulses of ¹³⁴Cs in gamma chamber.

### Data treatment

The spectrum collected in each measurement was smoothed using a Savitzky-Golay algorithm. It is possible to generate a signal profile for punctual contamination by plotting the counts registered (Bq) every 10 seconds versus the volume of fluid pumped through the apparatus, from the moment when the pulse is introduced to when the measurement was done. Two main parameters can be deduced from the signal profile: maximum counting rate and (B-A) parameter. Maximum counting rate was obtained by meaning all the values obtained between the maximum count value and this value minus four times its theoretical standard deviation. (B-A) parameter was calculated by difference between the values corresponding to the two inflection points of the signal profile. These values were obtained by applying the second derivate to the signal profile (δ²Bq/ δV² = 0).

Detection efficiency for the optimum window (OW) was calculated as the ratio between the net signal, maximum counting rate minus background value, and the specific activity of the standard solution pumped. The OW corresponds to the range of the spectra with best figure of merit (FM = E²/B, where E is the detection efficiency and B the background). Detection efficiency calibration was done for each radionuclide by fitting the detection efficiencies versus the (B-A) values for a series of punctual contamination and the continuous contamination measure. Contamination volume calibration was also done for each radionuclide, by modelling the relationship between the volume of contamination pumped and the value of (B-A) parameter.

Activity determination of an unknown punctual contamination pulse was done by registering its signal profile and calculating the maximum counting rate and the (B-A) parameter. By using these data, the specific activity (Bq/ml) was determined by using the net signal and the detection efficiency calibration curve, whereas the volume of the contamination, and therefore the total activity of the contamination (Bq), was calculated by using the specific activity and the volume calibration curve. Detection limits (Bq/ml) were calculated according to the Spanish Consejo de Seguridad Nuclear (CSN) criterion for control of liquid effluents of nuclear power plants: (DL= 2*s(B)/Eff), where s(B) is the experimental standard deviation of the background values registered in the calibration procedure and Eff is the detection efficiency of the scenario considered, punctual contamination or a continuous contamination.

### Characterisation of signal

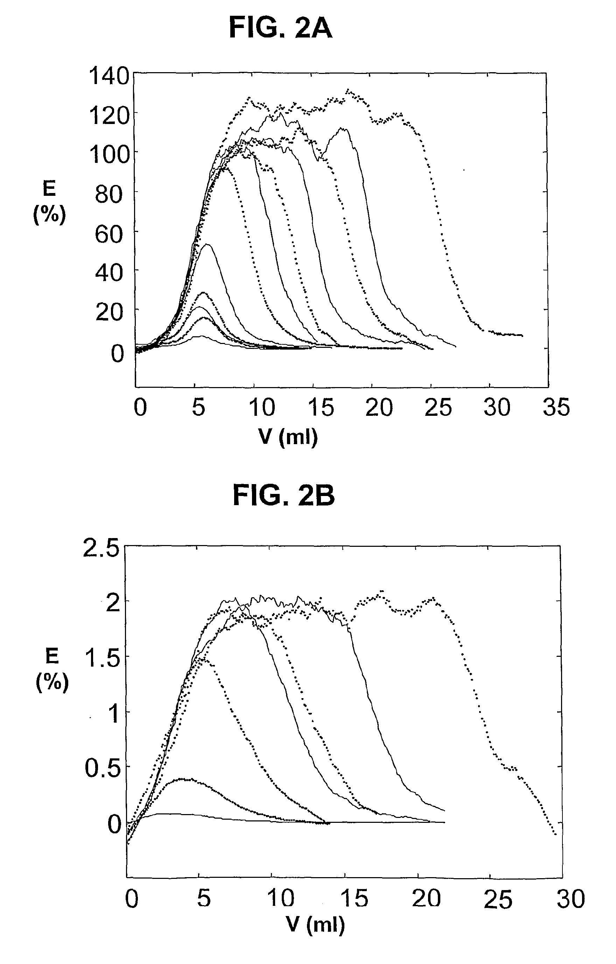

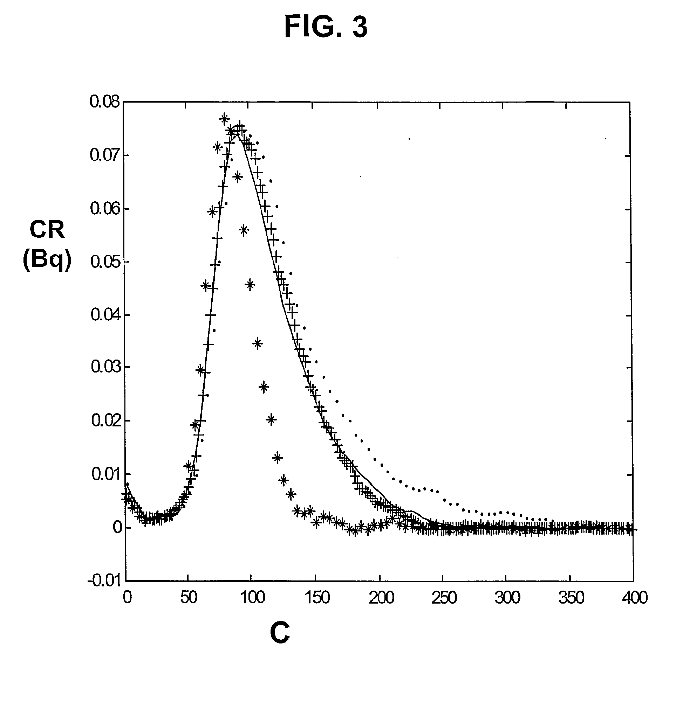

Alpha-beta chamber: The distribution of signals as a function of the type and energy of the radionuclide for the alpha-beta chamber is shown in FIG. 3. As far as their energy decreased, the positions of the peaks shifted to lower energies and the detection efficiencies decreased. The evolution of the signal versus the volume of the fluid for different contamination pulses showed a delay of 4-5 ml between the moment when contamination pulse was pumped into the apparatus and when it was detected (cf. FIG. 2). After this point, the detection efficiency increased linearly since it achieved a plateau (when the detector is full, the detection efficiency becomes constant), for a volume related to the contamination importance. The signal decreased sharply when the contamination ended.

Gamma chamber: The spectrum of ¹³⁴Cs in the gamma detector is shown in FIG. 3. For any contamination volume, the radionuclide was observed in the gamma detector just 1 ml after the introduction of the pulse in the stream whereas this signal was not detected in the alpha-beta system to 4-5 ml later. On the other hand, the detection efficiency in the alpha-beta chamber was one order of magnitude higher than in the gamma system.

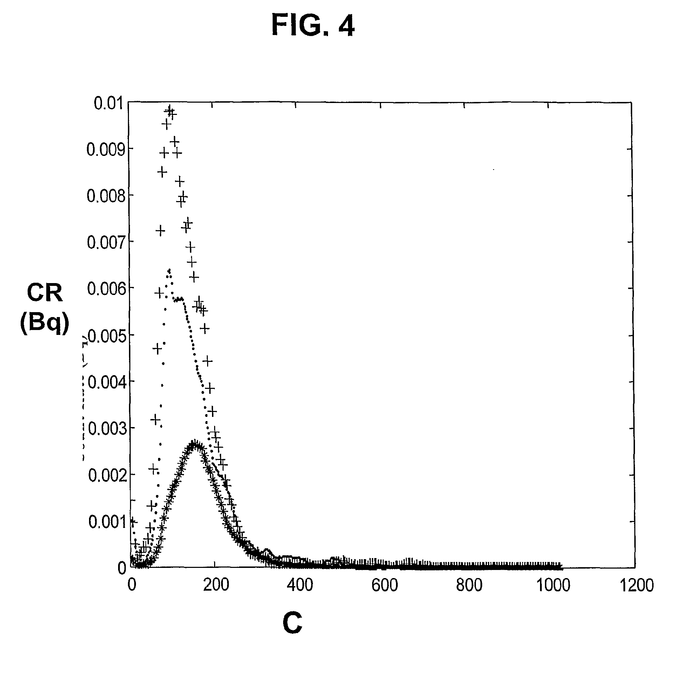

Background in alpha-beta and gamma chambers: The spectra of background obtained for alpha-beta and gamma systems are shown in FIG. 4. This figure also includes the coincidence spectrum obtained when signals coming from both detectors are measured simultaneously. Gamma and alpha-beta spectra spread approximately over the same range of energies but the former did so with a slightly higher intensity. On the other hand, the coincidence spectrum of both systems showed a distribution similar to that obtained for each chamber but just covering around 1/3 of the area (0.365 Bq on the whole spectra). This difference, in this case of 0.457 Bq for the alpha-beta chamber, could be a reduction expected for background when the apparatus operates in coincidence with a double transductor system.

### Activity determination

The capability of the apparatus to quantify radionuclides in a liquid effluent was evaluated by determining the specific activity and the volume of the contamination pulse of several active solutions. For this purpose, the two systems were calibrated and then applied to the quantification of spiked solutions. ⁹⁰Sr/⁹⁰Y, ¹³⁴Cs and ²⁴⁰Pu were analyzed in the alpha-beta chamber, whereas the radionuclide quantified in the gamma chamber was ¹³⁴Cs.

Alpha-beta chamber, ⁹⁰Sr/⁹⁰Y: Calibration of the alpha-beta chamber was performed by introducing a series of contamination pulses, between 0.2 to 20 ml and an infinite volume (included as 60 ml), in a continuous stream of the liquid effluent (cf. TABLE 1). For each case, the maxima signal and the (B-A) parameter were obtained from the profile of total signal versus the volume of liquid effluent. By using this information and the corresponding background spectrum, the net signals and the detection efficiencies at the optimum window (1:189) were calculated for each pulse and the two calibration models were built (detection efficiency versus (B-A) and volume of contamination versus (B-A) (cf. TABLE 2). Calibration of the volume of contamination pulse versus (B-A) parameter showed a linear relationship with some dispersion at volumes below 3 ml. Different scenarios can be considered in the application of these models: for very small contamination pulses, the detection efficiency could be as low as 5-10% and in the continuous episode, detection efficiency was high and constant, around 116% and the contamination volume could be clearly established. In these two cases, detection limits could vary, considering that the alpha-beta chamber is isolated, from 2.06 Bq/ml for a contamination pulse of 0.2 ml to 9.78*10⁻² Bq/ml for a continuous contamination situation. The quantification capability of the apparatus was evaluated at three activity levels and three contamination volumes (cf. TABLE 3). Relative errors obtained in the specific activity determination were mainly due to the volume of the contamination pulse; for 2 ml, relative errors were up to 18%. If the contamination pulse threshold of 5 ml was overcome, the specific activity could be determined with relative errors minor than 6% (10% for low activity level). In the determination of the volume of the pulse contamination, for contamination pulses of less than 3-5 ml, the relative errors rose to 65%, whereas when this volume increased, the amount of the contamination pulse could be determined with relative errors lower than 8%. These results indicate that contamination episodes of ⁹⁰Sr/⁹⁰Y in liquid effluents could be quantified in activity and volume whenever the pulse was not extremely small (< 5ml) and, even in these cases, the values determined could be considered a very good approximation to evaluate the importance of the contamination.

Alpha-beta chamber, ²⁴⁰Pu: Calibration was done following the same procedure and the functions of the two models describing the evolution of detection efficiency in the optimum window (1:161) versus (B-A) and the relationship of volume of pulse contamination versus the same parameter (cf. TABLE 2). For very small contamination pulses (< 5 ml), the values of detection efficiency obtained were lower than 2.5%. The second situation corresponded to contamination volumes between 5 and 15 ml. In this case, efficiency increased up to 3.5% and the (B-A) parameter was better defined. Finally, for continuous contamination episodes, the detection efficiency could be considered constant around this 3.5%. The detection limits calculated for the extreme situations of volume of contamination were 67.42 Bq/ml, for pulses of 0.2 ml, and 2.68 Bq/ml for continuous contamination situations. For low contamination volumes, e.g. 2 ml, there was an important error in the detection efficiency of the optimum window and, therefore, in the calculated activity value. For higher volumes, 7 ml, the (B-A) could be better established but the relative errors in the activity were up to 30%. When the contamination volume was higher, 12 ml, the determination of the activity was better established with relative errors of less than 10%. The same behaviour could be found in the determination of the volume of contamination. For very small pulses, results showed high relative errors up to 38%; for 7 ml pulses and low and medium activity levels, relative errors up to 24%; and for volumes of 12 ml the values decreased to a maximum of 18%. The best result was obtained for 12 ml and high activity level, 13%. These values allowed the quantification of contamination episodes of ²⁴⁰Pu in liquid effluents with relative errors of less than 13% except for very small pulses that could also be detected and determined with higher errors.

Alpha-beta chamber, ¹³⁴Cs: Calibration and quantification of ¹³⁴Cs solutions in the alpha-beta detector were done as in the two previous cases (cf. TABLES 1 and 3). The relationships of detection efficiency at the optimum window (1:202) and volume of contamination versus the (B-A) parameter were similar to those described for ⁹⁰Sr/⁹⁰Y and ²⁴⁰Pu, (cf. TABLE 2). Three situations were found in the analysis of a contamination pulse: small pulses (< 5 ml) with detection efficiency lower than 15%; large contamination volumes (> 10ml) with detection efficiency constant around 20%, and the intermediate situations (5-10 ml) with intermediate efficiencies. The limits of detection for the extreme volumes were 16.22 Bq/ml for 0.2 ml and 0.78 Bq/ ml for continuous contamination. For small contamination pulses (< 2 ml) relative errors could be up to 50%. For larger contamination volumes at any activity level, the relative errors obtained were always less than 10%. Similar behaviour could be observed in the determination of the volume of the contamination pulse. For very short pulses (2ml) the relative errors could be as high as 40%, whereas when the volume was larger, the errors decreased to maximum of 10%. These results show the capability of the alpha-beta chamber to quantify the activity and the volume of any contamination episode of ¹³⁴Cs but also of ⁹⁰Sr/⁹⁰Y and ²⁴⁰Pu in liquid effluents with acceptable relative errors whenever the volume considered was not very small (< 5ml). For these cases, detection of the contamination was achieved and quantification errors were higher.

Gamma chamber, ¹³⁴Cs: The characteristic of beta and gamma emitter of the ¹³⁴Cs radionuclide allowed its detection in the gamma chamber. Calibration and quantification of this isotope was done, in this case, by following the same procedure as in the alpha-beta chamber (cf. TABLES 1 and 3). The relationship between detection efficiency at the optimum window (13:81) and volume of contamination versus (B-A) parameter are included in TABLE 2. Extreme values of detection efficiency for short and continuous contamination were 0.04% and 1.3%. These values were very low and imply detection limits of 114 Bq/ml, for pulses of 0.2 ml, and 2.95 Bq/ml for continuous contamination._According to the results obtained in the previous section, the capability of the gamma chamber was evaluated by quantifying spiked contamination pulses of 7 ml. Relative errors obtained in activity and volume determinations were less than 15% and 7% respectively (cf. TABLE 3). For a 2 ml pulse, relative errors obtained were of 25% for the activity and 115% for the volume. On the contrary, very good results were achieved for a pulse of 12 ml and high activity level: 7%, for activity, and 3% for volume. In spite of the low detection efficiency, these values show the capability of the gamma chamber to quantify contamination pulses of ¹³⁴Cs whenever the volume of the contamination was higher than 5 ml.

**TABLE 1. Characteristics of the active solutions introduced in the apparatus for calibration purposes. Values correspond to the optimum windows.**

| | P.V. (ml) | Activity (Bq/ml) | Efficiency (%) | Background (Bq) |
|---|---|---|---|---|
| ⁹⁰Sr/⁹⁰Y (alpha-beta) | 0.2 | 45.98 | 5.53 | 0.61 |
| | 60 | 1.07 | 116.7 | 0.80 |
| ²⁴⁰Pu (alpha-beta) | 0.2 | 1360.44 | 0.13 | 0.49 |
| | 60 | 26.21 | 2.75 | 0.56 |
| ¹³⁴Cs (gamma) | 0.2 | 37883.67 | 0.034 | 0.17 |
| | 60 | 13.90 | 1.23 | 0.17 |

**TABLE 2. Relationships between detection efficiency in the optimum window and (B-A) parameter and volume of contamination and A-B parameter for different radionuclides. The contamination volumes used range between 3 and 20 ml plus a continuous episode quoted as 60 ml.**

| Isotope | Efficiency vs (B-A) | PV (pulse volume) vs (B-A) |
|---|---|---|
| ⁹⁰Sr/⁹⁰Y (alpha-beta) | Eff = 116.241 - 534.975/(B-A)^{1.5} | PV = -0.744 + 1.004*(B-A) |
| ²⁴⁰Pu (alpha-beta) | Eff = 3.787 - 35.656/(B-A)^{1.5} | PV = -2.6123 + 1.0829*(B-A) |
| ¹³⁴Cs (alpha-beta) | Eff = 20.034 - 71.186/(B-A)^{1.5} | PV = -0.720 + 1.004*(B-A) |
| ¹³⁴Cs (gamma) | Eff=1.199-10.557/(B-A)^{1.5} | PV=-1.644+1.054*(B-A) |

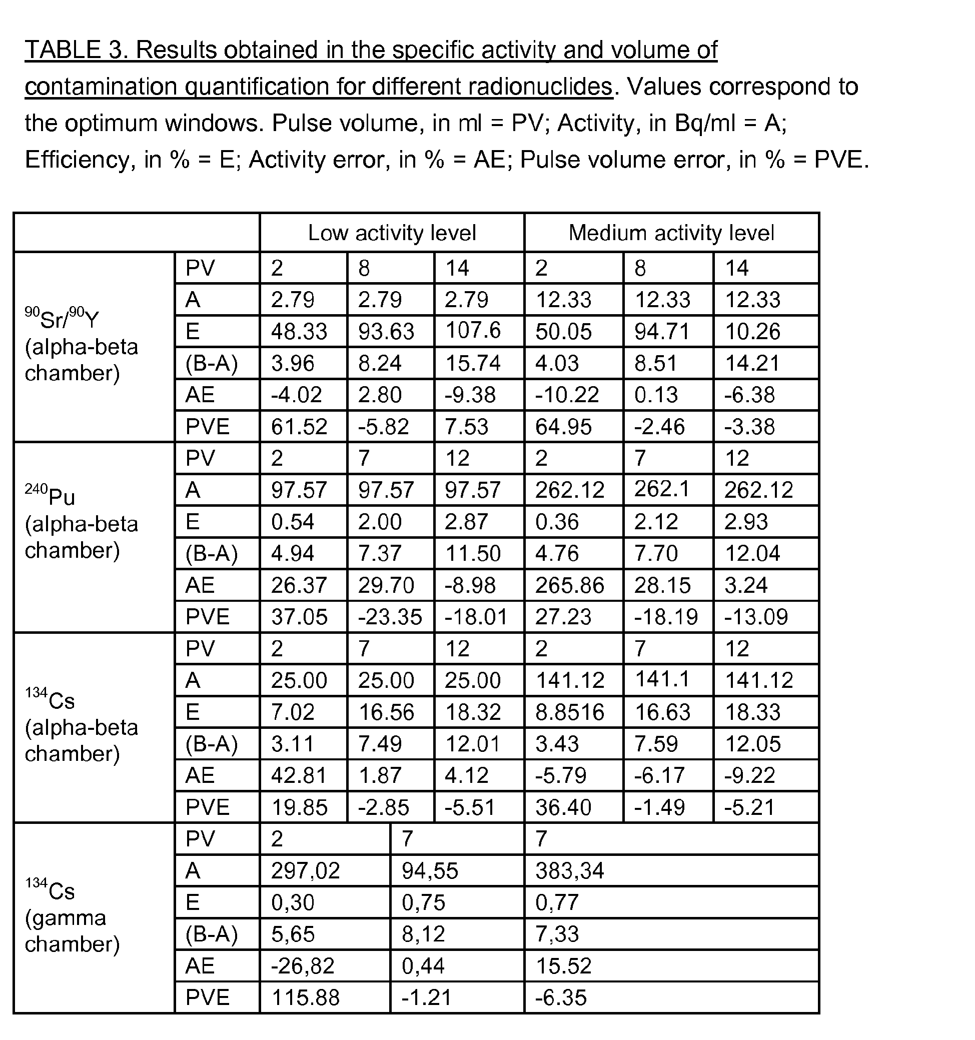

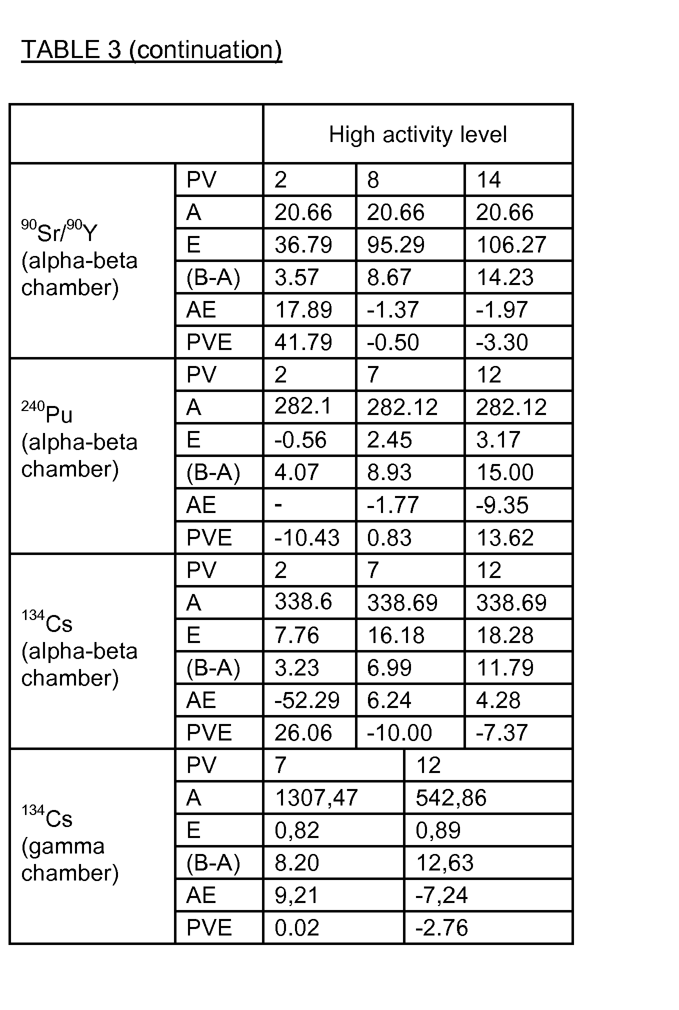

## Claims

1. An apparatus for the determination of radionuclides in a continuous flow of a fluid, comprising:
(i) an alpha-beta chamber (4) that converts alpha, beta and gamma radiation into photons and that is in contact with the fluid, said alpha-beta chamber comprising an "in" tube (1) and an "out" tube (2) to allow fluid flow;
(ii) a gamma chamber (6) that converts gamma radiation into photons, and that totally or partially covers the alpha-beta chamber (4), said gamma chamber being isolated from the fluid and from the photons generated in the alpha-beta chamber (4);
(iii) an external covering shield (7) that isolates the alpha-beta chamber (4) and the gamma chamber (6) from environmental UV-visible light; and
(iv) means (9) for separatedly sending photons generated in the respective chambers (4,6) to an analizing unit that converts the respective photons into respective electrical signals and that processes these signals.

2. The apparatus according to claim 1, wherein the active material of both chambers (4,6) is solid plastic scintillator.

3. The apparatus according to claim 2, wherein the gamma chamber (6) is formed by a solid block of solid plastic scintillator.

4. The apparatus according to claim 3, wherein the alpha-beta chamber (4) comprises a hollow defined by a wall that separates it from the gamma chamber (6).

5. The apparatus according to claim 4, wherein the hollow is filled with beads of solid plastic scintillator and/or the wall is formed by solid plastic scintillator.

6. The apparatus according to claim 5, wherein the alpha-beta chamber (4) and the gamma chamber (6) are coated with layers which reflect the photons generated inside, except for the respective sites of attachment of the respective sending means (9).

7. The apparatus according to claim 6, wherein the sending means (9) are optical fibers.

8. The apparatus according to claim 7, wherein the alpha-beta chamber (4) and the gamma chamber (6) have shapes defined by concentric cylinders and are provided with blunt-conical pipes (3,8) on one of their sides in order to adapt to optical fibers, both pipes pointing to opposite directions.

9. The apparatus according to claim 8, wherein the external covering shield has a detachable part (10) for having access to the hollow of the alpha-beta chamber.

10. A method for the determination of radionuclides in a continuous flow of a fluid using the apparatus as defined in any of the claims 1-9.

11. The method according to claim 10, wherein the fluid is a liquid.
